(19) Europäisches Patentamt
European Patent Office
Office européen des brevets

(11) **EP 1 995 561 B1**

(12) **FASCICULE DE BREVET EUROPEEN**

(45) Date de publication et mention
de la délivrance du brevet:
**14.03.2012 Bulletin 2012/11**

(51) Int Cl.:
*G01C 21/16* (2006.01)     *G01C 25/00* (2006.01)
*G01S 13/86* (2006.01)     *G05D 1/12* (2006.01)

(21) Numéro de dépôt: **08156489.0**

(22) Date de dépôt: **19.05.2008**

(54) **Procédé d'estimation des erreurs position et vitesse d'une centrale inertielle à l'aide d'un radar à imagerie SAR**

Verfahren zur Schätzung der Positions- und Geschwindigkeitsfehler einer Trägheitsmesseinheit mit Hilfe eines Radars mit SAR-Abbildung

Method for estimating position and velocity errors in an inertial unit with the help of a radar with SAR imaging

(84) Etats contractants désignés:
**DE GB IT**

(30) Priorité: **22.05.2007 FR 0703629**

(43) Date de publication de la demande:
**26.11.2008 Bulletin 2008/48**

(73) Titulaire: **THALES**
**92200 Neuilly sur Seine (FR)**

(72) Inventeur: **Ollivier, Franck**
**75013, PARIS (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 586 302     EP-A- 1 742 084**

• **BEVINGTON J E ET AL: "PRECISION AIDED INERTIAL NAVIGATION USING SAR AND DIGITAL MAP DATA" 1990'S - DECADE OF EXCELLENCE IN THE NAVIGATION SCIENCES. LAS VEGAS, MAR. 20 - 23, 1990, PROCEEDINGS OF THE POSITION LOCATION AND NAVIGATION SYMPOSIUM. (PLANS), NEW YORK, IEEE, US, 20 mars 1990 (1990-03-20), pages 490-496, XP000163828**

**Description**

Le domaine de l'invention concerne :

- le guidage précis d'un missile sur une cible fixe à partir d'un autodirecteur SAR « Synthetic Aperture Radar ».
- le recalage de la centrale inertielle d'un aéronef portant un radar SAR « Synthetic Aperture Radar ».

La présente demande de brevet décrit l'invention dans le cadre d'un guidage d'un missile sur une cible fixe.

De manière générale, les radars à antenne synthétique (SAR : Synthetic Aperture Radar) sont des radars qui exploitent par traitement, le déplacement du porteur pour améliorer la résolution liée à la largeur du faisceau d'antenne. La résolution spatiale, qui caractérise la finesse de l'image SAR acquise, est donc obtenue :

- dans la direction de l'axe antenne par la résolution en distance du radar ;
- dans la direction perpendiculaire à l'axe antenne par le traitement SAR

Cette remarque met en évidence que le porteur doit avoir un mouvement suivant la direction perpendiculaire à l'axe antenne, ce qui interdit d'effectuer une imagerie SAR sur le devant de la trajectoire, c'est-à-dire suivant la direction du vecteur vitesse.

Le traitement du type SAR est notamment décrit dans l'ouvrage de J.Darricau : Physique et Théorie du Radar -Tome 3, 3ème édition - Chapitre 21, page 483 - Editeur Sodipe, Paris 1994.

Ainsi, l'acquisition d'une image SAR sur une cible et son environnement permet de restituer la scène avec une résolution fine (de la classe métrique ou même submétrique). L'exploitation de cette image à partir des informations élaborées lors de la préparation d'une mission permet de localiser précisément la cible dans l'image et ce notamment lorsque la mission consiste pour un missile à localiser avec précision une cible et à se diriger vers elle avec précision.

Le positionnement géographique de l'image SAR est obtenu à partir des informations délivrées par la centrale inertielle du missile. Or ces informations peuvent être fortement bruitées ce qui conduit alors à une forte imprécision sur le positionnement géographique de l'image SAR. Il apparaît donc qu'à cause de ce phénomène bien que la cible soit localisée précisément dans l'image SAR, il ne soit pas possible d'en déduire une localisation géographique précise.

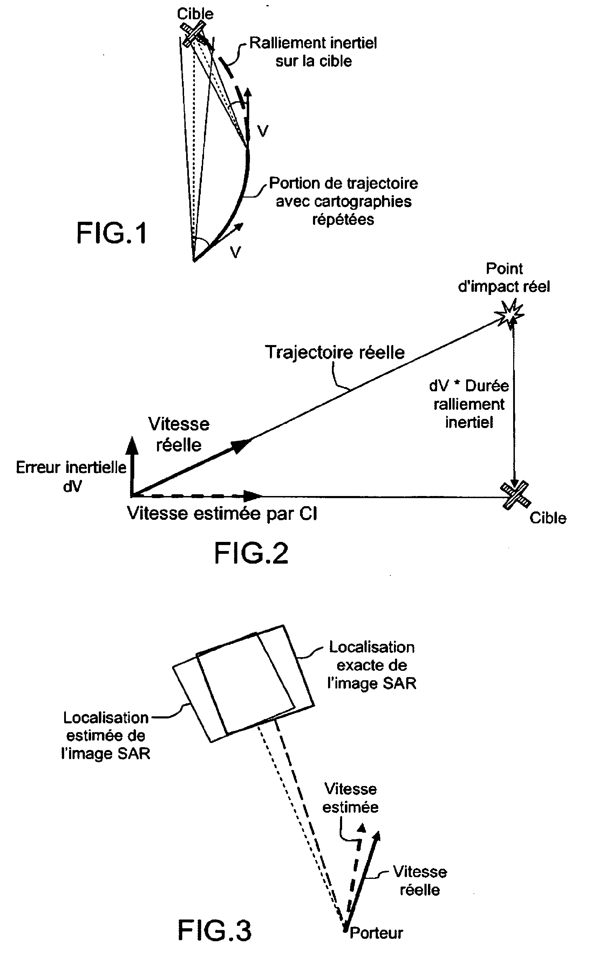

Il est rappelé que l'activation du mode SAR impose un dépointage angulaire entre le vecteur vitesse et la direction missile-cible et donc une trajectoire non directe comme illustré en figure 1.

Une première étape correspond à une portion de trajectoire avec cartographies répétées sur la cible. Lors du rapprochement vers la cible, le dépointage angulaire diminue jusqu'à devenir trop faible pour être compatible du mode SAR correspondant à une seconde étape. Ainsi à partir d'une certaine distance, l'autodirecteur arrête son fonctionnement et le missile rallie la cible en mode purement inertiel à partir des informations recalées par l'autodirecteur.

Durant ce ralliement, les erreurs sur le vecteur vitesse estimé par la centrale inertielle génèrent une dérive de la trajectoire missile, ce qui peut conduire à un décalage important du point d'impact par rapport à la cible comme illustré en figure 2.

Il est connu de la demande de brevet EP-A-0 586 302, un procédé de recalage des position et vitesse d'une centrale inertielle à bord d'un porteur poursuivant une trajectoire vers une cible fixe en utilisant une série d'images de type SAR et un filtre estimateur de type filtre de Kalman étendu.

La présente invention propose dans ce contexte un procédé de perfectionnement comprenant une étape d'optimisation.

Plus précisément l'invention a pour objet un procédé de détermination de l'erreur de position et du biais vitesse de la centrale inertielle embarquée d'un porteur poursuivant une trajectoire en direction d'une cible, comportant les étapes suivantes :

- l'acquisition à bord du porteur d'une série d'images de type SAR de la cible ;
- l'exploitation desdites images pour effectuer à partir de chacune des images une mesure de la distance et une mesure du Doppler de la cible ;

caractérisé en ce qu'il comporte

- l'estimation de la position précise du porteur par rapport à la cible et du biais vitesse, à partir des mesures de distance et du Doppler de la cible avec un filtre estimateur, de type filtre de Kalman étendu, ledit procédé comportant en outre une étape préalable d'optimisation de trajectoire en direction de la cible pour optimiser les performances du filtre estimateur.

Avantageusement, le procédé comporte l'utilisation d'un outil comportant une fonction de coût sous contraintes.

Avantageusement, la fonction de coût sous contraintes est la borne de Cramer Rao associée à l'estimation de la position du porteur par rapport à la cible et du biais vitesse.

Avantageusement, le procédé comporte les étapes suivantes :

- la segmentation de la trajectoire en N tronçons ;
- la détermination des 2N composantes de l'accélération transversale du porteur le long de la trajectoire en optimisant la borne de Cramer Rao pour la dernière image acquise.

Par ailleurs les contraintes prises en compte par la fonction de coût sont du type facteur de charge maximal du porteur et/ou dépointage angulaire minimal entre le vecteur vitesse et la direction porteur-cible et/ou angle d'impact minimal dans le plan vertical.

Ainsi selon le procédé de l'invention, les informations estimées par le porteur sont la position de la cible et les erreurs vitesse de la centrale inertielle. Ces informations sont évaluées à partir de la distance et du Doppler de la cible estimés à l'issue du traitement de chaque image SAR.

Le filtre fournit une estimation de la position réelle du porteur et une estimation du biais vitesse à partir des mesures distance et Doppler issues de l'exploitation des images SAR.

Ces mesures sont repérées dans un repère dont l'origine est la cible permettant ainsi une détermination précise de la position du porteur par rapport à la cible.

L'invention sera mieux comprise et d'autres avantages apparaîtront à la lecture de la description qui va suivre et grâce aux figures annexées parmi lesquelles :

- la figure 1 illustre la trajectoire non directe empruntée par un missile effectuant des images SAR sur la cible, avec un dépointage angulaire entre le vecteur vitesse et la direction porteur-cible ;
- la figure 2 illustre l'erreur sur la vitesse engendrée par la centrale inertielle au niveau du point d'impact réel par rapport à une cible lors d'une mission sans correction d'erreur ;
- la figure 3 illustre le décalage entre la localisation estimée de l'image SAR à partir des informations inertielles et la localisation exacte de l'image SAR ;
- la figure 4 illustre la position de la cible au point d'intersection des cercles iso distance et iso Doppler associés à l'ensemble des mesures obtenues le long d'une trajectoire non optimisée ;
- la figure 5 illustre l'optimisation de la trajectoire vis à vis de la localisation de la cible.

L'invention va être décrite dans le cadre d'une mission pour laquelle un missile autodirecteur cherche à localiser avec précision une cible. L'invention pourrait tout aussi bien être appliquée à tout aéronef portant un radar qui réalise des images SAR répétées sur un objet au sol.

De manière générale en définissant les paramètres suivants :

- Xe : position courante du missile
- Xd : position initiale du missile (à t = 0)
- Xm : déplacement du missile depuis t=0 estimé par la centrale inertielle
- t : temps courant
- b : erreurs vitesse de la centrale inertielle modélisées par des biais

On a l'équation d'évolution suivante :

$$X_e = X_m - t \cdot b + X_d$$

Les positions sont exprimées dans un repère dont l'origine est la cible. La position courante de la cible caractérise donc la position relative missile-cible qui est l'information exploitée par le guidage du missile

Et l'on peut considérer en première approximation que :

$$\begin{cases} \dot{X}_d = 0 \\ \dot{b} = 0 \end{cases}$$

Le symbole ˙ signifie la dérivation par rapport au temps.

Par ailleurs les équations de mesure sont les suivantes :

- Le déplacement du missile estimé par la centrale inertielle $X_m$ qui est faussé par un biais constant sur la vitesse
- La distance Missile-Cible

$$d = \left\| X_m - t \cdot b + X_d \right\| + \omega_d$$

Le symbole $\|a\|$ correspond à la norme du vecteur a

- La fréquence Doppler

$$f = \frac{2}{\lambda} \cdot \frac{\left\langle X_m - t \cdot b + X_d ; V_m - b \right\rangle}{\left\| X_m - t \cdot b + X_d \right\|} + \omega_f$$

avec Vm vitesse estimée par la centrale inertielle

Le symbole $\langle a\ b \rangle$ correspond au produit scalaire entre les vecteurs a et b

Où $\omega_d$ et $\omega_f$ sont les bruits de mesure, de variance $\sigma_d^2$ et $\sigma_f^2$

La précision sur la position de l'image SAR par rapport au missile dépend de la précision sur la vitesse de la centrale inertielle comme illustré en figure 3 qui schématise le décalage entre la localisation exacte de l'image SAR et la localisation estimée de l'image SAR et ce en fonction du décalage entre la vitesse vraie et la vitesse estimée.

Pour s'affranchir des erreurs de la centrale inertielle sur la vitesse, la démarche retenue est la suivante :

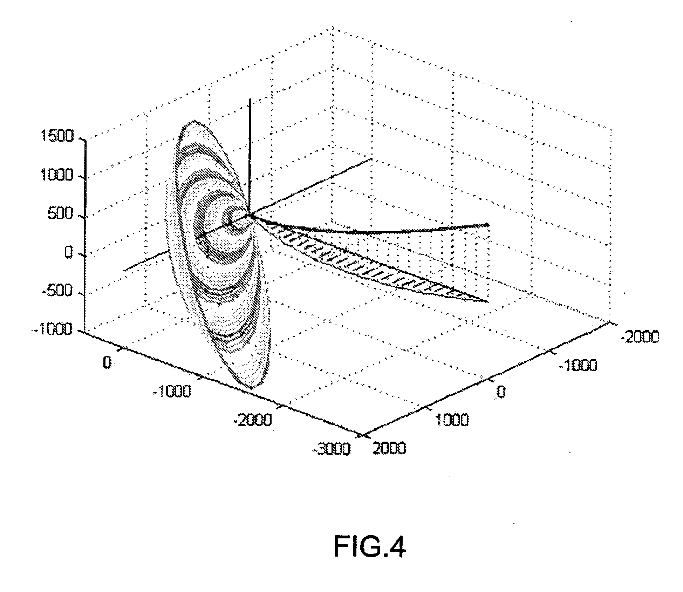

Le traitement de chaque image SAR fournit la Distance et le Doppler de la cible, la cible se situe sur un cercle correspondant à l'intersection d'une sphère iso Distance et d'un cône Iso Doppler comme illustré en figure 4. Les axes correspondent au repère géographique centré sur la cible, l'unité étant proportionnelle à des mètres. L'exploitation de la répétition des images fournit une estimée de la position de la cible et le biais vitesse.

Le paragraphe ci-après détaille les équations du filtre qui fournit une estimation position Xd et une valeur du biais vitesse b à partir des mesures distance et Doppler issues de l'exploitation des images SAR.

Le filtre peut avantageusement être un filtre de Kalman Etendu discret.

Conformément au paragraphe précédent le vecteur d'état X comprend six composantes qui sont les coordonnées du point Xd et les biais vitesse b suivant trois axes orthogonaux.

Les notations suivantes sont utilisées dans ce paragraphe :

- X(k|k-1) correspond à la prédiction de l'état à l'instant k estimée à l'instant k-1

- X(k|k) est l'estimation de l'état à l'instant k effectuée à l'instant k

- Y(k) est la mesure (distance, Doppler) effectuée à l'instant k

Ces notations d'indice s'appliquent aussi à la matrice de covariance de l'état Rx.

Le pas de discrétisation temporel correspond à la cadence de renouvellement des images SAR.

## Conditions Initiales

L'état X(0) et la matrice de covariance Rx(0|0) sont initialisés à partir de la connaissance de la trajectoire théorique et des performances attendues de la centrale inertielle.

## Prédiction

- Prédiction de l'état : X(k|k-1) = X(k-1|k-1)

- Prédiction de la covariance de l'état :Rx(k |k-1) = Rx(k-1|k-1)

- Prédiction de la mesure : Yp(k|k-1) = c(X(k|k-1))

La fonction c est détaillée ci après

**Innovation**

- Calcul de l'innovation : e(k) = Y(k) - Yp(k|k-1)
- Covariance de l'innovation :Re(k) = H(k) Rx(k|k-1) H(k)$^T$ + Rm(k)

La matrice H(k) correspond au jacobien des mesures, cette matrice est détaillée ci après. La matrice Rm(k) est la covariance des bruits de mesure

**Gain de Kalman**

- Calcul du gain de Kalman : K(k) = Rx(k|k-1) H(k)$^T$ Re(k)$^{-1}$

**Estimations finales**

- Correction de la prédiction : X(k|k) = X(k|k-1) + K(k) e(k)

- Correction de la covariance : Rx(k|k) =[I - K(k) H(k)] Rx(k |k-1)

La fonction c correspond à l'expression de la mesure attendue en fonction de l'état estimé

$$c\big(X(k|k-1)\big)=\begin{bmatrix}\big\|X_m - t\cdot b + X_d(k|k-1)\big\| \\[2mm] \dfrac{2}{\lambda}\cdot\dfrac{\big\langle X_m - t\cdot b(k|k-1) + X_d(k|k-1); V_m - b(k|k-1)\big\rangle}{\big\|X_m - t\cdot b(k|k-1) + X_d(k|k-1)\big\|}\end{bmatrix}$$

L'expression du Jacobien des mesures est la suivante. Pour des simplifications de notation, dans cette expression Xd et b correspondent respectivement à Xd(k |k-1) et à b(k |k-1).

$$H_k=\begin{pmatrix}\left(\dfrac{X_m - t\cdot b + X_d}{\|X_m - t\cdot b + X_d\|}\right)^T & \left(-t\cdot\dfrac{X_m - t\cdot b + X_d}{\|X_m - t\cdot b + X_d\|}\right)^T \\[3mm] \dfrac{2}{\lambda}\cdot\left(\dfrac{V_m - b}{\|X_m - t\cdot b + X_d\|} - \dfrac{(X_m - t\cdot b + X_d)\cdot\langle X_m - t\cdot b + X_d; V_m - b\rangle}{\|X_m - t\cdot b + X_d\|^3}\right)^T & \dfrac{2}{\lambda}\left(-t\cdot\left(\dfrac{V_m - b}{\|X_m - t\cdot b + X_d\|} - \dfrac{(X_m - t\cdot b + X_d)\cdot\langle X_m - t\cdot b + X_d; V_m - b\rangle}{\|X_m - t\cdot b + X_d\|^3}\right)\dfrac{X_m - t\cdot b + X_d}{\|X_m - t\cdot b + X_d\|}\right)^T\end{pmatrix}$$

Selon l'invention, le procédé propose d'utiliser un filtre estimateur. Pour renforcer l'efficacité d'un tel filtre, il peut avantageusement être prévu en amont d'optimiser la trajectoire du porteur en direction de la cible.

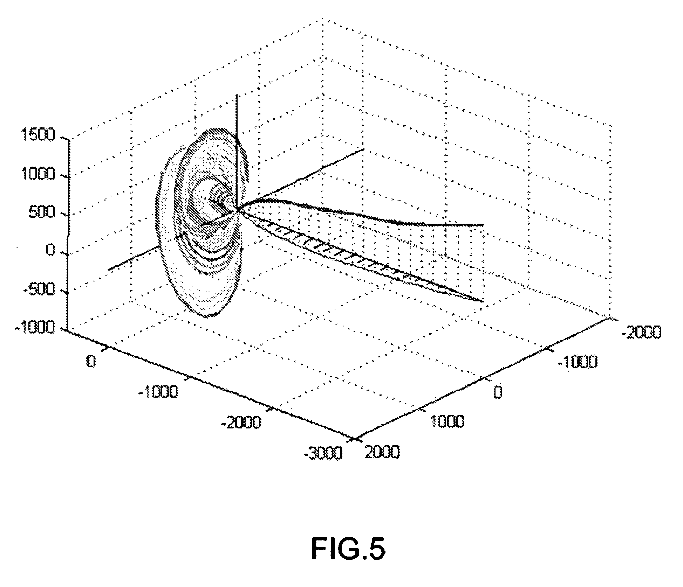

En effet la forme de la trajectoire a un impact direct sur les performances de ce filtre estimateur. Ce couplage peut être appréhendé en considérant les positions relatives de l'ensemble des cercles associés aux distance et Doppler de la cible obtenues à partir du traitement de chaque image SAR. Il apparaît par exemple qu'une trajectoire effectuée dans un plan à incidence constante conduit à des cercles qui sont tous tangents à une droite passant par la cible. La figure 4 illustre ce phénomène. La position estimée de la cible a donc tendance à glisser le long de cette droite ce qui se traduit par des erreurs importantes. Par contre dans le cas d'une trajectoire ayant du défilement suivant les trois axes, les cercles distance Doppler sont tous dans des plans différents, ce qui permet de localiser plus précisément le point d'intersection qui est la cible comme illustré en figure 5.

De façon à optimiser les performances du filtre estimateur, il est proposé d'utiliser un outil permettant de rechercher une trajectoire optimale vis à vis des précisions de la position relative de la cible et des erreurs vitesse estimées à la fin de l'activation de l'autodirecteur c'est-à-dire lors de l'engagement du ralliement inertiel sur la cible. Cet outil doit permettre de déterminer la trajectoire à partir de la résolution d'un problème du type optimisation d'une fonction de coût sous contraintes.

La fonction de coût considérée est la borne de Cramer Rao évaluée pour la dernière image SAR acquise. Cette borne correspond à la meilleure précision obtenable par un filtre estimateur non biaisé. Les contraintes prises en compte portent sur l'autodirecteur (portée, squint angle minimal compatible du mode SAR,..) et sur le missile (facteur de charge,...).

La trajectoire est découpée en N tronçons. Pour chacune de ces portions de trajectoire, l'accélération transversale est supposée constante. L'outil détermine les 2*N composantes des accélérations le long de la trajectoire, ce qui après intégration fournit la forme de la trajectoire sachant que le point de départ de la trajectoire est fixée par l'utilisateur et que la cible se trouve à l'origine du repère. La détermination des 2*N composantes de l'accélération est obtenue de façon à optimiser la borne de Cramer Rao pour la dernière image acquise.

La borne de Cramer Rao est l'inverse de la matrice de Fisher $J_k$, qui pour le modèle retenu, est obtenue par l'équation récursive suivante :

$$J_{k+1} = J_k + \tilde{H}_{k+1}^T \cdot R_{k+1}^{-1} \cdot \tilde{H}_{k+1}$$

Où
$\tilde{H}_{k+1}$ est le Jacobien de la fonction de mesure, évalué en la vraie valeur de l'état avec le Jacobien de $f$ qui est la matrice des dérivées partielles $\left( \dfrac{\partial f_i}{\partial x_j} \right)_{i,j}$

- 
- $R_{k+1}$ est la matrice de covariance du bruit de mesure
- $J_0$ est l'inverse de la covariance de l'état initial

Pour le modèle l'expression du Jacobien des mesures est

$$\tilde{H}_k = \left( \begin{array}{cc} \left( \dfrac{X_m - t \cdot b + X_d}{\left\| X_m - t \cdot b + X_d \right\|} \right)^T & \left( -t \cdot \dfrac{X_m - t \cdot b + X_d}{\left\| X_m - t \cdot b + X_d \right\|} \right)^T \\ \dfrac{2}{\lambda} \cdot \left( \dfrac{V_m - b}{\left\| X_m - t \cdot b + X_d \right\|} - \dfrac{(X_m - t \cdot b + X_d) \cdot \langle X_m - t \cdot b + X_d ; V_m - b \rangle}{\left\| X_m - t \cdot b + X_d \right\|^3} \right)^T & \dfrac{2}{\lambda} \cdot \left( -t \cdot \left( \dfrac{V_m - b}{\left\| X_m - t \cdot b + X_d \right\|} - \dfrac{(X_m - t \cdot b + X_d) \cdot \langle X_m - t \cdot b + X_d ; V_m - b \rangle}{\left\| X_m - t \cdot b + X_d \right\|^3} \right) - \dfrac{X_m - t \cdot b + X_d}{\left\| X_m - t \cdot b + X_d \right\|} \right)^T \end{array} \right)$$

Où les différentes fonctions sont évaluées au temps $t = t_k$ correspondant à l'instant de la k-ieme mesure.

Le calcul récursif de $J_k$ pour une trajectoire va permettre d'évaluer la qualité de celle-ci en calculant la trace de la borne de Cramèr-Rao pour la dernière image acquise, ce qui caractérise la précision globale du point d'impact dans le cas d'un missile parfait. Plus cette trace est faible et plus les informations fournies par l'autodirecteur permettent un guidage précis sur la cible.

L'optimisation de la trajectoire est effectuée en considérant les contraintes suivantes :

- le facteur de charge maximal du missile pendant la phase de cartographie SAR et pendant le ralliement inertiel,
- le dépointage angulaire minimal entre le vecteur vitesse et la direction missile-cible.
- l'angle d'impact minimal dans le plan vertical.

**Revendications**

1. Procédé pour déterminer l'erreur de position et le biais vitesse d'une centrale inertielle à bord d'un porteur poursuivant une trajectoire en direction d'une cible fixe comportant les étapes suivantes :

   - l'acquisition à bord du porteur d'une série d'images de type SAR de la cible ;
   - l'exploitation desdites images pour mesurer à partir de chacune des images une mesure de la distance et une mesure du Doppler de la cible;

   **caractérisé en ce qu'**il comporte en outre:

   - l'estimation de la position précise du porteur par rapport à la cible et du biais vitesse, à partir des mesures de distance et du Doppler de la cible avec un filtre estimateur, de type filtre de Kalman étendu, ledit procédé comportant en outre une étape préalable d'optimisation de trajectoire en direction de la cible pour optimiser les performances du filtre estimateur.

2. Procédé pour déterminer l'erreur de position et le biais vitesse d'une centrale inertielle à bord d'un porteur poursuivant une trajectoire en direction d'une cible selon la revendication 1, **caractérisé en ce qu'**il comprend l'utilisation d'un outil comportant une fonction de coût sous contraintes.

3. Procédé pour déterminer l'erreur de position et le biais vitesse d'une centrale inertielle à bord d'un porteur poursuivant une trajectoire en direction d'une cible selon la revendication 2, **caractérisé en ce que** la fonction de coût sous contrainte est la borne de Cramer Rao.

4. Procédé pour déterminer l'erreur de position et le biais vitesse d'une centrale inertielle à bord d'un porteur poursuivant une trajectoire en direction d'une cible selon la revendication 3, **caractérisé en ce qu'**il comprend les étapes suivantes :

   - la segmentation de la trajectoire en N tronçons ;
   - la détermination des 2N composantes de l'accélération transversale du porteur le long de la trajectoire en optimisant la borne de Cramer Rao pour la dernière image acquise.

5. Procédé pour déterminer l'erreur de position et le biais vitesse d'une centrale inertielle d'un porteur poursuivant une trajectoire en direction d'une cible selon l'une des revendications 1 à 4, **caractérisé en ce que** les contraintes prises en compte lors de l'optimisation de la trajectoire sont de type facteur de charge maximal du porteur et/ou dépointage angulaire minimal entre le vecteur vitesse et la direction porteur-cible et/ou l'angle d'impact minimal dans le plan vertical.

**Claims**

1. A method for determining the position error and the speed bias of an inertial unit on board a carrier following a trajectory towards a fixed target, which method comprises the following steps:

   - acquiring a series of SAR type images of the target on board the carrier;
   - using said images to measure from each image a measurement of the distance and a measurement of the Doppler from the target; **characterised in that** it further comprises;
   - estimating the precise position of the carrier relative to the target and the speed bias, on the basis of the measurements of the distance and of the Doppler from the target, using an estimator filter of the extended Kalman filter type, said method further comprising a prior step of optimising the trajectory towards the target in order to optimise the performance levels of the estimator filter.

2. The method for determining the position error and the speed bias of an inertial unit on board a carrier following a trajectory towards a target according to claim 1, **characterised in that** it comprises the use of a tool that includes a constrained cost function.

3. The method for determining the position error and the speed bias of an inertial unit on board a carrier following a trajectory towards a target according to claim 2, **characterised in that** the constrained cost function is the Cramer Rao bound.

4. The method for determining the position error and the speed bias of an inertial unit on board a carrier following a trajectory towards a target according to claim 3, **characterised in that** it comprises the following steps:

   - segmenting the trajectory into N parts;
   - determining the 2N components of the transverse acceleration of the carrier along the trajectory by optimising the Cramer Rao bound for the last acquired image.

5. The method for determining the position error and the speed bias of an inertial unit on board a carrier following a trajectory towards a target according to claims 1 to 4, **characterised in that** the type of constraints that are taken into account during the optimisation of the trajectory are the maximum load factor of the carrier and/or the minimum angular misalignment between the speed vector and the carrier-target direction and/or the minimum angle of impact in the vertical plane.


**Patentansprüche**

1. Verfahren zur Bestimmung des Positionsfehlers und der Geschwindigkeitsverzerrung einer Trägheitsmesseinheit an Bord eines Trägers, der einen Weg in Richtung eines starren Ziels verfolgt, das die folgenden Schritte aufweist:

   - Erfassung einer Reihe von SAR-Abbildungen des Ziels an Bord des Trägers ;
   - Auswertung der Abbildungen, um ausgehend von jeder der Abbildungen eine Messung der Entfernung und eine Messung des Dopplers des Ziels zu messen, **dadurch gekennzeichnet, dass** es weiterhin umfasst ;
   - die Schätzung der genauen Position des Trägers im Verhältnis zum Ziel und zur Geschwindigkeitsverzerrung ausgehend von den Entfernung- und Dopplermessungen des Ziels mit einem Schätzungsfilter vom Typ erweiterter Kalman-Filter, wobei das Verfahren weiterhin einen vorherigen Schritt der Optimierung des Wegs in Richtung des Ziels zur Optimierung der Leistungen des Schätzungsfilters aufweist.

2. Verfahren zur Bestimmung des Positionsfehlers und der Geschwindigkeitsverzerrung einer Trägheitsmesseinheit an Bord eines Trägers, der einen Weg in Richtung eines Ziels verfolgt, nach Anspruch 1, **dadurch gekennzeichnet, dass** es die Verwendung eines Werkzeugs umfasst, das eine Kostenfunktion unter Beanspruchungen aufweist.

3. Verfahren zur Bestimmung des Positionsfehlers und der Geschwindigkeitsverzerrung einer Trägheitsmesseinheit an Bord eines Trägers, der einen Weg in Richtung eines Ziels verfolgt, nach Anspruch 2, **dadurch gekennzeichnet, dass** die Kostenfunktion unter Beanspruchung die Cramer-Rao-Schranke ist.

4. Verfahren zur Bestimmung des Positionsfehlers und der Geschwindigkeitsverzerrung einer Trägheitsmesseinheit an Bord eines Trägers, der einen Weg in Richtung eines Ziels verfolgt, nach Anspruch 3, **dadurch gekennzeichnet, dass** es die folgenden Schritte umfasst:

   - die Segmentierung des Wegs in N Abschnitte,
   - die Bestimmung der 2N Komponenten der Querbeschleunigung des Trägers entlang des Wegs durch Optimierung der Cramer-Rao-Schranke für das letzte erfasste Abbild.

5. Verfahren zur Bestimmung des Positionsfehlers und der Geschwindigkeitsverzerrung einer Trägheitsmesseinheit eines Trägers, der einen Weg in Richtung eines Ziels verfolgt, nach einem der Ansprüche 1 bis 4, **dadurch gekennzeichnet, dass** die Belastungen, die bei der Optimierung des Wegs berücksichtigt werden, vom Typ maximaler Belastungsfaktor des Trägers und/oder minimale Winkel-Störimpulsbeseitigung zwischen dem Vektor Geschwindigkeit und der Richtung Träger-Ziel und/oder minimaler Einschlagwinkel in vertikaler Ebene sind.

Cible

Ralliement inertiel
sur la cible

V

Portion de trajectoire
avec cartographies
répétées

V

**FIG.1**

Point
d'impact réel

Trajectoire réelle

dV * Durée
ralliement
inertiel

Vitesse
réelle

Erreur inertielle
dV

Vitesse estimée par CI

Cible

**FIG.2**

Localisation
exacte de
l'image SAR

Localisation
estimée de
l'image SAR

Vitesse
estimée

Vitesse
réelle

**FIG.3**

Porteur

FIG.4

FIG.5

**EP 1 995 561 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0586302 A

**Littérature non-brevet citée dans la description**

• **J.Darricau.** Physique et Théorie du Radar -Tome 3. 1994, 483